# EUROPÄISCHE PATENTANMELDUNG

(11) **EP 4 825 492 A1**
(43) Veröffentlichungstag der Anmeldung: **21.10.2026**
(21) Anmeldenummer: 25171332.7
(22) Anmeldetag: 17.04.2025
(51) Int. Cl.: B01L 3/02, G01N 21/03, G01N 35/10

(54) **KÜVETTE ZUR VERARBEITUNG EINER PROBE**

(71) Anmelder: Hombrechtikon Systems Engineering AG, 8634 Hombrechtikon (CH)
(72) Erfinder: Lutze, Konstantin, 8713 Uerikon (CH); Zwirner, Daniel, Zürich (CH)
(74) Vertreter: IPS Irsch AG

(57) **Zusammenfassung**

Küvette zum Verarbeiten einer Probe (8), umfassend einen Küvettenkörper (2) mit einem proximalen Ende (3), einem distalen Ende (4) und eine den Innenraum des Küvettenkörpers bildende Küvettenkammer (6), wobei die Küvette (1) mit dem proximalen Ende (2) an einer Pipettenspitze (7) anordnenbar ist und die Probe (8) über das distale (4) Ende aufnehmbar ist, wobei am distalen Ende (4) ein Aufnahmeelement (9) zur Aufnahme der Probe (8) anbringbar ist, und das Aufnahmeelement (9) mindestens ein Kapillarelement (10) umfasst. Das Kapillarelement (10) kann dabei dergestalt an dem Aufnahmeelement (9) angeordnet sein, dass die Probe (8) mittels Kapillarkräften des Kapillarelements (10) in das Kapillarelement (10) aufgenommen werden kann, wobei ein erstes Fluid (32) in die Küvettenkammer (6)einbringbar ist, dadurch gekennzeichnet, dass das Aufnahmeelement (9) derart an einer die Küvettenkammer (6) umgebenden Wand (11) des Küvettenkörpers (2) anbringbar ist, das das erste Fluid (32) in Kontakt mit der sich im Kapillarelement (10) befindlichen Probe (8) bringbar ist und diese Probe (8) mittels Adhäsionskräften des ersten Fluids (32) in die Küvettenkammer (6) des ersten Fluids (32) aufgenommen werden kann.

## Beschreibung

Die Erfindung bezieht sich auf eine Küvette zum Verarbeiten einer fluiden Probe, eine Pipettiervorrichtung zum Verarbeiten einer fluiden Probe und ein Verfahren zur Verarbeitung einer fluiden Probe.

Bei der Verarbeitung einer Vielzahl von Proben muss eine Vielzahl von Bearbeitungsschritten durchgeführt werden. Hierzu werden in der Regel Laborautomaten verwendet, da ein präzises Pipettieren von Reagenzien in und aus Behältern, wie etwa Mikrotitrierplatten, gewährleistet werden muss.

Die Laborautomaten des Standes der Technik umfassen hierbei in der Regel einen Behandlungsraum, in welchen die Proben in Behälter eingebracht werden; eine Pipettiervorrichtung zur Durchführung der Bearbeitungsschritte; eine Bewegungseinrichtung zur Bewegung der Pipettiervorrichtung im Behandlungsraum und eine elektronische Steuereinrichtung, welche die Pipettiervorrichtung und andere Teile des Laborautomat zur Durchführung der Bearbeitungsschritte steuert und anweist.

Durch die Laborautomaten wird also ein automatisierter Probenvorbereitungsprozess mit erhöhter Effizienz und verbessertem Durchsatz gewährleistet.

Pipettiervorrichtungen werden jedoch nicht nur in Laborautomaten, sondern allgemein zur Dosierung von Flüssigkeiten verwendet. Diese Flüssigkeiten werden in eine Pipettenspitzen der Pipettiervorrichtung durch eine Spitzenöffnung aufgenommen und ausgegeben. Hierfür ist ein Verdrängungselement in die Pipettiervorrichtung integriert, insbesondere ein Verdrängungselement für ein Gas, welches durch ein Andockelement für die Pipettenspitze mit der Pipettenspitze strömungsverbunden ist. Mittels des Verdrängungselements wird ein Luftpolster verlagert, so dass Flüssigkeit in die Pipettenspitze eingesaugt und daraus ausgestossen wird. Das Verdrängungselement ist dabei in der Regel ein Zylinder mit einem darin verlagerbaren Kolben.

Die Pipettenspitzen werden lösbar mit dem Andockelement verbunden, damit sie nach Gebrauch gegen eine frische Pipettenspitze ausgetauscht werden können. Hierdurch können bei nachfolgenden Dosierungen Kontaminationen vermieden werden. Pipettenspitzen für den einmaligen Gebrauch sind kostengünstig aus Kunststoff verfügbar.

Das Andockelement umfasst insbesondere einen Vorsprung zum Befestigen von Pipettenspitzen mit vorzugsweise zylindrischer oder konischer Form, auf welchen die Pipettenspitze mit einer dazu passenden Aufstecköffnung beziehungsweise Aufnahme klemmbar ist. Dies kann ohne Anfassen der Pipettenspitze durch Eindrücken des Vorsprungs in die Aufstecköffnung der in einem Halter bereitstehenden Pipettenspitze erfolgen.

Zur Vermeidung von Kontaminationen weisen Pipettiervorrichtungen vorzugsweise eine Abwurfeinrichtung mit einer Antriebseinrichtung und einem Abwerfer auf. Durch Betätigen des Antriebseinrichtung wird der Abwerfer so verlagert, dass er die Pipettenspitze von dem Vorsprung löst, ohne dass diese vom Anwender berührt werden muss. Hierfür weist die Antriebseinrichtung in der Regel eine Mechanik auf, welche mittels eines Knopfes manuell betätigt werden kann (oder bei einem Laborautomat auch automatisch), um die Pipettenspitze vom Andockelement zu lösen.

Im Stand der Technik ist es zudem üblich, Küvetten an den Pipettenspitzen anzuordnen, um ein Fluid in die Küvette abzugeben und es in der Küvette zu analysieren. Die Anordnung der Küvette an der Pipettenspitze erfolgt dabei, analog zur Befestigung der Pipettenspitze an der Küvette, bevorzugt ohne, dass der Anwender die Küvette berühren muss.

Bei einem Laborautomaten kann ein Verdrängungselement der Pipettiervorrichtung in das Andockelement integriert sein, insbesondere im inneren des Andockelement angeordnet sein. Hierbei kann das Verdrängungselement als ein im Andockelement verlagerbarer Kolben ausgestaltet sein.

Oft weisen die Laborautomaten auch integrierte optische Detektionsvorrichtungen zur Analyse der Proben und/oder von Gemischen aus Proben und vorgelegten Fluiden auf. Die Analyse erfolgt dabei in der Regel mit optischen Techniken wie Spektroskopie oder Photometrie.

Insbesondere bei Biomolekülen ist die Lumineszenz-Spektroskopie eine wichtige Analysemethode, bei welcher das Emissionslicht, welches auf Basis einer Photonenabsorption der Biomoleküle entsteht, ausgewertet wird.

An grosse Biomoleküle können hierfür durch eine Fluoreszenzmarkierung fluoreszierende chemische Gruppen angehängt werden, die dann als Marker für dieses Biomolekül dienen.

Bei vielen Prozessen spielt insbesondere die Konzentration der Probe (also der relevanten Moleküle in Lösung) für die weitere Verarbeitung eine Rolle, welche insbesondere durch die Fluoreszenz-Spektroskopie einfach zu bestimmen ist.

Im Rahmen dieser Erfindung kann unter dem Begriff «Probe» insbesondere eine Probe verstanden werden, welche eine Flüssigkeit mit Substanzen wie Biomolekülen (unter anderem DNS, RNS, Nukleinsäuren, Proteine, Zellen und Zellbestandteile, Monomere) oder anderen chemischen Substanzen umfasst. Eine Fluid kann im Rahmen der Erfindung zum Beispiel ein geeignetes Lösungsmittel sein.

Auch die optische Dichte (Mass für die Abschwächung einer Strahlung nach Durchqueren eines Mediums) kann für die Bestimmung der Konzentration verwendet werden.

Laborautomaten und im speziellen Pipettiervorrichtungen können für das Aufnehmen von unterschiedlichen Fluidmengen genutzt werden. Gerade für die Aufnahme geringer Mengen Fluids bzw. geringer Probenvolumen, in der Grössenordnung von bis 1.5 µl, sind sie aber oft ungenau und schwer in der Handhabung, da das geringe Volumen allein schon durch den Einfluss von Phänomenen wie Oberflächenspannung und Adhäsion dazu tendiert an Behältern und Wänden von Pipettenspitzen und Küvetten zu haften. So haben Pipettiervorgänge bei diesen Volumina nicht selten einen CV-Wert von 10% und mehr.

Die Erfindung ist auf dieses Problem gerichtet. Es ist daher ein Ziel der Erfindung, eine Küvette bereitzustellen, die diese Nachteile aus dem Stand der Technik behebt.

Der Gegenstand der Erfindung, der diesen Zweck erfüllt, ist durch die Merkmale des unabhängigen Anspruchs gekennzeichnet.

Weitere vorteilhafte Massnahmen und Ausführungsformen der Erfindung ergeben sich aus den abhängigen Ansprüchen.

Erfindungsgemäss wir eine Küvette zum Verarbeiten einer Probe vorgeschlagen, die einen Küvettenkörper mit einem proximalen Ende, einem distalen Ende und eine den Innenraum des Küvettenkörpers bildende Küvettenkammer umfasst.

Die Küvette kann dabei mit dem proximalen Ende an einer Pipettenspitze anordnenbar sein und die Probe kann über das distale Ende aufgenommen werden.

Hierfür kann am distalen Ende ein Aufnahmeelement zur Aufnahme der Probe angebracht werden. Dieses Aufnahmeelement umfasst mindestens ein Kapillarelement, wobei das Kapillarelement dergestalt an dem Aufnahmeelement angeordnet ist, dass die Probe mittels Kapillarkräften des Kapillarelements in das Kapillarelement aufgenommen werden kann. Das Kapillarelement erlaubt es, sehr gezielt Volumen aufzunehmen. Insbesondere bei geringen Probevolumen von unter 1.5 µl ist dies vorteilhaft, da wie oben bereits erwähnt, die Handhabung dieser Probengrössen Schwierigkeiten mit sich bringt.

Ein erstes Fluid ist in die Küvettenkammer einbringbar und das Aufnahmeelement kann derart an einer die Küvettenkammer umgebenden Wand des Küvettenkörpers angebracht werden, dass das erste Fluid in Kontakt mit der sich im Kapillarelement befindlichen Probe bringbar ist und die Probe mittels Adhäsionskräften des ersten Fluids in die Küvettenkammer aufgenommen werden kann.

Das Kapillarelement kann verschiedene Formen haben und unterschiedlich ausgestaltet sein. So kann es beispielsweise ein Kapillarkanal sein. Es ist aber auch vorstellbar, dass zwei parallel angeordnete Platten verwendet werden, sogenannte Kapillarplatten, zwischen denen, entlang ihrer einander zugekehrten Plattenflächen, Kapillarkräfte auftreten. Auch die Verwendung und Anordnung von mehr als zwei Kapillarplatten ist denkbar.

Die Anordnung von mindestens einem Kapillarkanal beinhaltet auch die Anordnung von mehreren Kanälen, sodass dadurch etwa die Aufnahme von mehreren unterschiedlichen Proben oder Fluiden möglich gemacht wird. Dies hat insbesondere Vorteile bei der Analyse einer Probe aber auch bei der Beobachtung und Analyse einer Reaktion mit mehreren Edukten. Auf diese Weise können mehrere Analyseschritte und Stoffe gezielt, und unter Beobachtung vorgenommen bzw. zugeführt werden.

Der gleiche Vorteil kann selbstverständlich auch bei der Verwendung mehrerer Kapillarplatten auftreten.

Ein weiterer Vorteil der geringen Volumenaufnahme durch das Kapillarelement, insbesondere den Kapillarkanal besteht darin, dass von Beginn an weniger Probenvolumen hergestellt bzw. bereitgestellt werden muss, um die Probe bzw. eine Reaktion analysieren zu können. Dies ist ein entscheidender Kostenvorteil, da dies auch bedeutet, dass weniger Volumen der anderen Edukte benötigt wird, um die Probe in derselben Zeit analysieren zu können.

Zudem wird weniger Personal benötigt, das die grossen Volumina der Proben herstellt.

In einem Ausführungsbeispiel der Küvette kann das Aufnahmeelement als eine Verlängerung mindestens der Wand des distalen Endes der Küvette anordnenbar sein.

Dadurch ist es möglich auch normale, also handelsübliche Küvetten mit dem Aufnahmeelement auszurüsten und für die Aufnahme kleiner, exakter Probenvolumen zu benutzen.

In einem weiteren Ausführungbeispiel kann die Küvette mindestens eine an dem Küvettenkörper angeordnete Messfläche umfassen. Die Messfläche kann dabei insbesondere an einer Umfangsseite des Küvettenkörpers angebracht sein. Diese Messfläche ermöglicht eine genaue Analyse des Inhalts der Küvette. Auf diese Weise kann eine Probe beziehungsweise ein Fluid im Inneren der Küvette, also der Küvettenkammer, zu einem bestimmten Zeitpunkt oder während eines bestimmten Zeitfensters analysiert werden. Insbesondere kann eine Detektionsvorrichtung an der Messfläche angeordnet werden, mit der die Analyse vorgenommen werden kann. Die Detektionsvorrichtung kann dabei händisch bedient werden.

Eine vollautomatisierte Detektionsvorrichtung ist ebenfalls denkbar, sowie eine fernsteuerbare Detektionsvorrichtung.

In Ausführung der Erfindung kann die Detektionsvorrichtung eine Strahlungsquelle zur Bestrahlung der Probe und/oder des Gemischs aus Probe und Fluid mit einer Primärstrahlung und einen Detektor zur Aufnahme einer von der Probe und/oder des Gemischs stammenden Sekundärstrahlung umfassen (zur Analyse derselben). Die Strahlungsquelle erzeugt also eine elektromagnetische Strahlung (die Primärstrahlung). Die Sekundärstrahlung ist insbesondere eine von der Probe und/oder dem Gemisch emittierte / stammende elektromagnetische Sekundärstrahlung, welche Sekundärstrahlung durch eine Wechselwirkung der Primärstrahlung mit der Probe und/oder dem Gemisch induziert ist.

Hierbei wird als Primärstrahlung besonders bevorzugt UV/Vis-Strahlung und/oder NIR-Strahlung, insbesondere im Wellenlängenbereich von 190-1000nm, im speziellen 365-720nm verwendet. Als Detektor eignet sich hierbei insbesondere eine Diode, insbesondere eine Silizium-Photodiode oder eine Vakuumphotodiode. Als Strahlungsquellen können ein Laser, eine Deuteriumlampe, eine Wolframlampe, eine Halogenlampe, eine Quecksilber-Dampf Lampe oder eine LED (Leuchtdiode) verwendet werden.

In der Praxis kann die Detektionsvorrichtung auch eine Vielzahl von Detektoren und/oder Strahlungsquellen umfassen. Die Strahlungsquellen können dabei verschiedene Wellenlängen oder Wellenlängenbereiche als Primärstrahlung ausstrahlen. Besonders bevorzugt ist hierbei die Verwendung von zwei Strahlungsquellen, welche als eine erste Strahlungsquelle (vorzugsweise erste LED) mit einer ersten Wellenlänge (z.B. 450-490nm) und eine zweite Strahlungsquelle (vorzugsweise zweite LED) mit einer zweiten Wellenlänge (z.B. 600-630nm) ausgestaltet sind. Ist eine Vielzahl von Strahlungsquellen vorhanden, kann die Analyse konfokal erfolgen. Die Strahlengänge der Primärstrahlung von den verschiedenen Strahlungsquellen werden also auf einen gemeinsamen Brennpunkt in der Probe und/oder dem Gemisch gerichtet.

Die Detektionsvorrichtung kann also ein Photometer, insbesondere ein Spektrometer, im speziellen ein Fluorometer sein. Das Fluorometer misst die Parameter der Fluoreszenz der Probe und/oder des Gemischs: Intensität und Wellenlängenverteilung des Emissionsspektrums (der Sekundärstrahlung) nach Anregung durch die Primärstrahlung.

Als Messprinzip kann im Rahmen der Erfindung eine Absorptionsmessung verwendet werden, wobei die Strahlungsquelle Primärstrahlung im UV/Vis-Bereich und/oder NIR-Bereich (insbesondere einer einzigen Wellenlänge, wie z.B. 280nm) erzeugt und der durch den Durchgang durch die Probe und die Verlängerung geschwächte Lichtstrahl (Sekundärstrahlung) mittels des Detektors erfasst wird. Zur Charakterisierung der Absorptionsintensität wird hierbei bevorzugt die Extinktion oder optische Dichte (Mass für Abschwächung der Primärstrahlung in einem Medium (Probe und Verlängerung) verwendet.

Weiterhin bevorzugt wird im Rahmen der Erfindung eine Kamera verwendet, um die Probe zu Messen und zu analysieren. Die Kamera kann dabei in allen gängigen Wellenlängenbereichen arbeiten, beispielsweise im sichtbaren Licht, im UV- und Infrarotbereich.

In einem weiteren Ausführungsbeispiel einer erfindungsgemässen Küvette kann die Küvette am distalen Ende eine Verjüngung aufweisen, sodass ein Umfang einer Anordnung aus Küvette und Aufnahmeelement im Wesentlich gleich dem Umfang der Küvette am proximalen Ende ist.

Die ist beispielsweise bei der Handhabung der Küvette, insbesondere beim Transport vorteilhaft, da eine Kombination aus Küvette und mindestens einem Aufnahmeelement so mit dem gleichen Werkzeug an jeder Umfangsseite der Kombination erfolgen kann, ohne das Greifwerkzeug auf den Umfang an der jeweiligen Stelle der Kombination neu einstellen zu müssen.

In einem weiteren Ausführungsbeispiel einer erfindungsgemässen Küvette kann die Küvette am distalen Ende über einen ersten Verbindungsbereich, der mit einem zweiten Verbindungsbereich am proximalen Ende des Aufnahmeelements mit dem Aufnahmeelement verbindbar ist, verfügen, sodass das Aufnahmeelement über die Verbindungsbereiche abnehmbar an der Küvette angeordnet werden kann. Der erste und der zweite Verbindungsbereich können dabei insbesondere eine formschlüssige und/oder kraftschlüssige, fluiddichte Steckverbindung bilden. Dies hat den Vorteil, dass mittels der Verbindung der Fluidfluss zwischen der Küvette und dem Aufnahmeelement reversibel hergestellt werden kann.

Die formschlüssige Steckverbindung kann beispielsweise über Vertiefungen im ersten Verbindungsbereich und über dazu passende Erhöhungen am zweiten Verbindungsbereich verfügen, um den Widerstand der Steckverbindung gegenüber äusseren Kräften zu erhöhen.

In einem weiteren Ausführungsbeispiel einer erfindungsgemässen Küvette kann der Kapillarkanal über einen ersten Abschnitt zum Aufnehmen der Probe und über einen zweiten Abschnitt zum Abgeben der Probe verfügen, wobei die Abschnitte bevorzugt Öffnungen sind. Der erste Abschnitt kann dabei insbesondere an dem distalen Ende des Aufnahmeelements angeordnet sein, sodass der Kanal an dem Ende mit dem ersten Abschnitt offen ist, dort also über keine Abschlusswand verfügt, die den Kapillarkanal in Längsrichtung begrenzt.

Es ist zudem denkbar, dass der Kapillarkanal ein an einer Umfangsseite offener Kapillarkanal ist, sodass eine offene Umfangsseite vorliegt.

Weiterhin ist es denkbar, dass der erste und der zweite Abschnitt zusammen auf einer der Umfangsseiten angeordnet sind, wobei der zweite Abschnitt zwischen dem ersten Abschnitt und dem proximalen Ende der Küvette angeordnet ist. Auch die Anordnung des ersten und des zweiten Abschnitts jeweils unterschiedlichen Umfangsseiten des Kapillarkanals ist denkbar.

Ebenfalls ist es denkbar, dass der Kanal an beiden Enden je eine Abschlusswand aufweist, sodass er in Längsrichtung von den Abschlusswänden begrenzt wird.

Bevorzugt kann zumindest der zweite Abschnitt auf der offenen Umfangsseite angeordnet ist.

Ebenso können der erste und der zweite Abschnitt dergestalt hintereinander in Längsrichtung auf einer Umfangsseite angeordnet werden, dass sie die offene Umfangsseite bilden.

Ein solcher Kapillarkanal hat insbesondere Vorteile in der Herstellung, da dies leichter in gängigen Verfahren, wie etwa Spritzguss, herstellbar ist, als ein Kanal mit vier oder mehr geschlossenen Umfangsseiten.

Bei der Herstellung hoher Stückzahlen kommt zudem ein Skalierungseffekt in Bezug auf Material- und Gewichtseinsparungen zum Tragen.

In einem weiteren Ausführungsbeispiel einer erfindungsgemässen Küvette kann sich das Kapillarelement, insbesondere der Kapillarkanal auf einer Innenseite des Aufnahmeelements von einem distalen Ende des Aufnahmeelements über das proximale Ende des Aufnahmeelements und auf einer an das proximale Ende angrenzende Innenwand der Küvettenkammer bis in die Küvettenkammer erstrecken.

Generell ist es denkbar, dass sich mehr als ein Kapillarelement, insbesondere mehr als ein Kapillarkanal auf der Innenseite wie oben beschrieben erstreckt. Auf diese Weise können beispielsweise mehrere Proben gleichzeitig aufgenommen werden. Auch die Aufnahme von Stoffen zur Analyse der Proben ist denkbar, sodass diese Stoffe gleichzeitig mit der Probe in die Küvettenkammer aufgenommen werden können. Das erlaubt unter anderem einen gezielt steuerbaren zeitlichen Beginn einer Reaktion in der Küvettenkammer bzw. einer Analyse des Inhalts der Küvettenkammer.

Die Stoffe zur Analyse können dabei dem Fachmann bekannte Analysestoffe sein, beispielsweise Farbstoffe, lumineszente oder radioaktive Marker oder auch Biomoleküle wie etwa Enzyme.

In einem bevorzugten Ausführungsbeispiel einer erfindungsgemässen Küvette, kann sich das Kapillarelement, insbesondere der Kapillarkanal, lediglich bis zur Küvettenkammer erstrecken.

Dies hat den Vorteil, dass kein Teil des Kapillarelements, insbesondere kein Teil des Kapillarkanals, in der Küvette vorhanden sein muss, was die Herstellung der Küvette, beispielsweise im Spritzgussverfahren vereinfacht. Zudem ermöglicht es auch die Verwendung von handelsüblichen Küvetten, welche kein Kapillarelement aufweisen.

Selbstverständlich kann eine erfindungsgemässe Küvette auch aus anderen Materialien, etwa Glas oder auch aus Kombinationen verschiedener Materialien, hergestellt werden.

In einem bevorzugten Ausführungsbeispiel der erfindungsgemässen Küvette kann das Aufnahmeelement dergestalt an dem distalen Ende der Küvette angebracht werden, dass es sich über 5 - 80% der Fläche des distalen Endes erstreckt, bevorzugt über 15 - 80% und weiterhin bevorzugt über 20 - 40% und besonders bevorzugt über 20 - 33 % der Fläche erstreckt.

Durch die unterschiedliche Flächenabdeckung durch das Aufnahmeelement, lässt sich die Position des Mündungsbereich des Kapillarelements, insbesondere des Kapillarkanals, am distalen Ende der Küvette anpassen. Dies hat den Vorteil, dass Probe, Fluid, Farbstoffe, Analysestoffe oder sonstige Stoffe an vorgebbaren Stellen in die Küvette eingebracht werden können, was zu einer vorteilhaften Verteilung derselben in der Küvette genutzt werden kann.

Das Aufnahmeelement kann auch aus beispielsweise zwei sich gegenüberstehenden Platten bestehen, wobei die Platten über jeweils eine erste und eine zweite Fläche verfügen und beide Platten dergestalt nebeneinander angeordnet werden können, dass die ersten und zweiten Flächen der Platten parallel zueinander angeordnet sind und, dass sich zwischen zwei einander gegenübersehenden Flächen der Platten eine Kapillarkraft aufbauen kann. Durch diese Kapillarkraft kann dabei eine Probe/eine Fluid zwischen die Platten aufgenommen und transportiert werden.

In einem weiteren Ausführungsbeispiel der erfindungsgemässen Küvette kann das Aufnahmeelement integraler Bestandteil der Küvette sein.

Dadurch kann der Halt des Aufnahmeelements an der Küvette verbessert werden. Zudem fällt so der Bearbeitungsschritt des Anordnens des Aufnahmeelements an der Küvette weg.

In einem weiteren Ausführungsbeispiel der erfindungsgemässen Küvette kann ein durch das Kapillarelement, insbesondere den Kapillarkanal, aufnehmbares Volumen durch eine Geometrie des Kapillarelements vorgegeben werden, sodass durch das Kapillarelement immer ein genau vorgebbares Volumen aufgenommen werden kann, wobei das Kapillarelement insbesondere eine definierte Innenkontur mit einem vorbestimmten Querschnitt und/oder einer entsprechenden Länge aufweisen kann, sodass das aufnehmbare Volumen durch diese geometrischen Parameter eindeutig festgelegt werden kann.

Für die Form des Kapillarkanals sind verschiedene Möglichkeiten denkbar. So kann der Kanal rund oder oval sein, oder auch eine vieleckige Durchschnittsfläche haben. Bevorzugt weist der Küvettenkanal jedoch eine rechteckige Form auf.

Bevorzugt ist der Kapillarkanal dabei zwischen 0.3 und 0.6 mm tief, 0.5-0.9 mm breit und 6.3-6.7 mm lang, besonders bevorzugt 0.4 mm tief, 0.7 mm breit und 6.5 mm lang.

In einem bevorzugten Ausführungsbeispiel der erfindungsgemässen Küvette kann in der Küvette ein Farbstoff vorgelegt werden, vorzugsweise ein getrockneter Farbstoff, der an den Wänden der Küvette angebracht werden kann. Ebenso ist es denkbar, dass der Farbstoff in dem Kapillarelement vorgelegt werden kann. Dies hat den Vorteil, dass kein Farbstoff in einem zusätzlichen Verarbeitungsschritt in die Küvette aufgenommen werden muss. Zudem kann auf diese Weise die Menge des Farbstoffs exakt und gleichbleibend gewährleistet werden, was gerade bei der Analyse von mehreren Proben vorteilhaft ist, da so die Varianz in den Messergebnissen verringert wird.

In einem bevorzugten Ausführungsbeispiel der erfindungsgemässen Küvette kann das Kapillarelementkonditioniert werden, etwa durch dem Fachmann bekannte Plasmabehandlungen und/oder Oberflächenbeschichtungen wie, z.B. PEG Beschichtungen.

Auf diese Weise kann der Kanal beispielsweise mit einer hydrophilen Beschichtung beschichtet werden, was einen verbesserten Transport von Fluiden und Stoffen in dem Kapillarelement ermöglicht. Dieser Effekt kann dabei auch durch eine andere der oben genannten Konditionierungsmethoden erfolgen.

Auch die Konditionierung bzw. Beschichtung der Küvettenkammer und/oder der gesamten Küvette mit einem oder mehreren dieser Verfahren und Stoffe ist denkbar.

In einem bevorzugten Ausführungsbeispiel der erfindungsgemässen Küvette kann die Küvette elektrisch leitfähig sein. Insbesondere kann sie zwischen dem Aufnahmeelement und dem proximalen Ende des Küvettenkörpers elektrisch leitfähig sein. Dies kann dadurch erreicht werden, dass die Küvette zumindest teilweise aus einem elektrisch leitfähigen Material gefertigt wird und/oder zumindest teilweise mir einer elektrisch leitfähigen Schicht beschichtet wird. Diese Schicht kann dabei beispielsweise aufgedampft werden.

Dies hat den Vorteil, dass sogenannte »Capacitive Liquid Level Detection» angewandt werden kann, um das Eintauchen der Küvette in die Probe zu detektieren.

Ausserdem wird ein erfindungsgemässes Verfahren zum Verarbeiten einer Probe mit einer Küvette vorgeschlagen, umfassend die folgenden Schritte:
Bereitstellen einer Pipettiervorrichtung, Anordnen der Küvette an der Pipettiervorrichtung und einbringen eines ersten Fluids in die Küvette mittels der Pipettiervorrichtung. Aufnehmen der Probe in das Kapillarelement des Aufnahmeelements durch Einführen des Aufnahmeelements in die Probe und Aufnehmen der Probe in die Küvettenkammer aus dem Kapillarkanal über Adhäsion durch Herstellung eines Kontakts zwischen des ersten Fluids und der Probe mittels Betätigung der Pipettiervorrichtung.

Dies ermöglicht die Aufnahme von einer exakten Menge an Volumen einer Probe, eines Analysestoffes oder eines Fluids, gerade auch von Volumina unter 2 µl. Insbesondere ist die Aufnahme von Volumina unter 1,5 µl möglich, sowie von Volumina von unter 1 µl und sogar von unter 0,5 µl angedacht

Zudem kann durch die Verwendung von Kapillarkräften das aufzunehmende Volumen in unter einer Sekunde in das Kapillarelement aufgenommen werden. Dies ist insbesondere dann ein Vorteil, wenn Reaktionen analysiert werden, da es hierfür wichtig ist zu wissen, wann zwei Stoffe miteinander in Kontakt kommen und wie hoch der Grad der Durchmischung der beiden Stoffe von Beginn an ist, was sich auf diese Weise feststellen lässt.

In einem erfindungsgemässen Verfahren kann das Fluid und/oder die Probe durch Auf- und Abpipettieren in der Küvette und/oder in der Pipettenspitze gemischt werden.

Dies bringt den Vorteil, dass kein extra Mischgefäss notwendig ist. Daher kann auf diese Weise eine Ressourceneinsparung erfolgen. Zudem wird durch das getrennte Aufnehmen von Probe und Fluid gewährleistet, dass beide Stoffe sicher und kontaminationsfrei aufgenommen werden, und gleichzeitig Ressourcen sowie Zeit gespart werden.

In einem erfindungsgemässen Verfahren kann die Probe und/oder ein Gemisch aus Fluid und Probe aus der Küvette abgegeben werden.

Gerade bei der Verarbeitung potenziell gefährlicher Substanzen kann so die Gefahr eines Kontakts mit diesen Substanzen verringert werden. Rückstände grosser Volumen von Fluid, Gemisch oder Probe in gebrauchten Küvetten bzw. Pipettenspitze können so reduziert werden und können somit keine Gefahr mehr für Personen darstellen.

Zudem können flüssige und feste Laborabfälle so sauber getrennt und besser recycelt werden, da die fluiden Reste aus der Küvette abgegeben werden.

In einem erfindungsgemässen Verfahren kann die Probe und/oder das Fluid und/oder das Gemisch aus Probe und Fluid analysiert werden, insbesondere können sie mittels einer Detektionsvorrichtung analysiert werden. Bevorzugt können sie dabei bereits in der Küvettenkammer analysiert werden. Eine vorangehende oder nachfolgende Analyse ausserhalb der Küvettenkammer ist aber ebenfalls denkbar. Auf diese Weise kann eine durchgängige, lückenlose Analyse der Probe/des Fluids/des Gemischs gewährleistet werden.

Zudem ermöglicht es einen breiten und flexiblen Einsatz verschiedener Analysegeräte in der Detektionsvorrichtung, um die jeweils bestmöglichen Ergebnisse zu erzielen. Auch die Verwendung von mehreren Analysengeräten zur selben Zeit ist denkbar. Hierbei ist es sowohl möglich, dass es sich um unterschiedliche Analysetypen als auch um Analysen desselben Typs oder eine Kombination daraus handelt.

Die Erfindung wird im Folgenden unter Bezugnahme auf Ausführungsbeispiele und die Zeichnungen näher erläutert. In den schematischen Zeichnungen sind, teilweise im Schnitt, dargestellt:
- Fig. 1:: Eine schematische Darstellung einer erfindungsgemässen Küvette mit einem Aufnahmeelement;
- Fig. 2:: Eine schematische Darstellung eines Ausschnittes einer erfindungsgemässen Küvette mit einem Aufnahmeelement;
- Fig. 3:: Eine schematische Darstellung einer erfindungsgemässen Küvette angeordnet an einer Pipettiervorrichtung;
- Fig. 4: Eine schematische Darstellung einer erfindungsgemässen Küvette im Querschnitt;
- Fig. 5: Eine schematische Darstellung einer erfindungsgemässen Küvette mit Kapillarplatten;
- Fig. 6:: Eine schematische Darstellung eines Laborautomaten mit einer erfindungsgemässen Küvette;
- Fig. 7:: Eine schematische Darstellung einer Pipettiervorrichtung mit einer erfindungsgemässen Küvette und der Bewegungsrichtungen der Pipettiervorrichtung in einem Laborautomaten.

Es sollte verstanden werden, dass die Zeichnungen schematische und schematische Darstellungen von beispielhaften Ausführungsformen der Offenbarung sind und weder die vorliegende Offenbarung einschränken noch notwendigerweise massstabsgerecht gezeichnet sind.

Die neuartigen Merkmale, die für die Offenbarung charakteristisch sind, sowohl hinsichtlich ihres Aufbaus als auch ihrer Funktionsweise, zusammen mit weiteren Zielen und Vorteilen, werden aus der folgenden Beschreibung ersichtlich, die in Verbindung mit den beigefügten Zeichnungen betrachtet wird, in denen eine Ausführungsform der Offenbarung beispielhaft dargestellt ist.

In der folgenden Beschreibung werden die verschiedenen Ausführungsformen der vorliegenden Offenbarung mit Bezug auf die beigefügten Zeichnungen beschrieben. Wie erforderlich, werden hier detaillierte Ausführungsformen der vorliegenden Offenbarung erörtert; es ist jedoch zu verstehen, dass die offengelegten Ausführungsformen lediglich beispielhaft für die Ausführungsformen der Offenbarung sind, die in verschiedenen und alternativen Formen verkörpert werden können. Die Abbildungen sind nicht notwendigerweise massstabsgetreu, und einige Merkmale können übertrieben oder verkleinert sein, um Details bestimmter Komponenten zu zeigen. Daher sind spezifische strukturelle und funktionelle Details, die hier offenbart werden, nicht als einschränkend zu interpretieren, sondern lediglich als repräsentative Grundlage, um dem Fachmann zu zeigen, wie er die vorliegende Offenbarung auf verschiedene Weise anwenden kann.

Die hier verwendeten Singularformen "ein", "ein" und "die" schliessen den Plural ein, sofern der Kontext nicht eindeutig etwas anderes vorschreibt. Der Hinweis auf "ein pulverförmiges Material" bedeutet zum Beispiel auch, dass Mischungen aus einem oder mehreren pulverförmigen Materialien vorhanden sein können, sofern dies nicht ausdrücklich ausgeschlossen ist.

Sofern nicht anders angegeben, sind alle in der Beschreibung und den Ansprüchen verwendeten Zahlen, die Mengen ausdrücken, so zu verstehen, dass sie in allen Beispielen durch den Begriff "ungefähr" modifiziert werden. Dementsprechend sind die in der Beschreibung und den Ansprüchen angegebenen numerischen Parameter, sofern nicht anders angegeben, Näherungswerte, die in Abhängigkeit von den gewünschten Eigenschaften, die durch die Ausführungsformen der vorliegenden Offenbarung erzielt werden sollen, variieren können. Zumindest sollte jeder numerische Parameter unter Berücksichtigung der Anzahl signifikanter Stellen und der üblichen Rundungskonventionen ausgelegt werden, ohne dass dies als Versuch angesehen werden soll, die Anwendung der Lehre von den Äquivalenten auf den Umfang der Ansprüche einzuschränken.

Darüber hinaus gilt die Angabe von Zahlenbereichen in dieser Beschreibung als Offenlegung aller Zahlenwerte und Bereiche innerhalb dieses Bereichs (sofern nicht ausdrücklich anders angegeben). Wenn beispielsweise ein Bereich von etwa 1 bis etwa 50 reicht, wird davon ausgegangen, dass er z. B. 1, 7, 34, 46,1, 23,7 oder jeden anderen Wert oder Bereich innerhalb des Bereichs umfasst.

Die Begriffe "etwa" und "ungefähr" weisen darauf hin, dass es sich bei dem betreffenden Betrag oder Wert um den angegebenen spezifischen Wert oder einen anderen Wert in seiner Nähe handeln kann. Im Allgemeinen sollen die Begriffe "ungefähr" und "ungefähr", die einen bestimmten Wert bezeichnen, einen Bereich innerhalb von ± 5 % des Wertes bezeichnen. Ein Beispiel: Die Formulierung "etwa 100" bezeichnet einen Bereich von 100 ± 5, d. h. den Bereich von 95 bis 105. Wenn die Begriffe "etwa" und "ungefähr" verwendet werden, kann im Allgemeinen davon ausgegangen werden, dass ähnliche Ergebnisse oder Wirkungen gemäss der Offenbarung innerhalb eines Bereichs von ±5 % des angegebenen Werts erzielt werden können.

Der hier verwendete Begriff "und/oder" bedeutet, dass entweder alle oder nur eines der Elemente der genannten Gruppe vorhanden sein kann. Zum Beispiel bedeutet "A und/oder B" "nur A oder nur B oder sowohl A als auch B". Im Falle von "nur A" deckt der Begriff auch die Möglichkeit ab, dass B nicht vorhanden ist, d. h. "nur A, aber nicht B".

Der Begriff "im Wesentlichen" wird verwendet, um zu bezeichnen, dass das folgende Merkmal, die folgende Eigenschaft oder der folgende Parameter entweder vollständig (vollständig) realisiert oder erfüllt ist oder in einem Ausmass, das das beabsichtigte Ergebnis nicht beeinträchtigt.

Der hier verwendete Begriff "enthaltend" ist nicht ausschliessend und offen zu verstehen. Der Begriff "umfassend" umfasst jedoch auch die restriktiveren Bedeutungen "im Wesentlichen bestehend aus" und "bestehend aus", so dass zum Beispiel "eine Zusammensetzung, die eine Verbindung A umfasst" auch (im Wesentlichen) aus der Verbindung A bestehen kann.

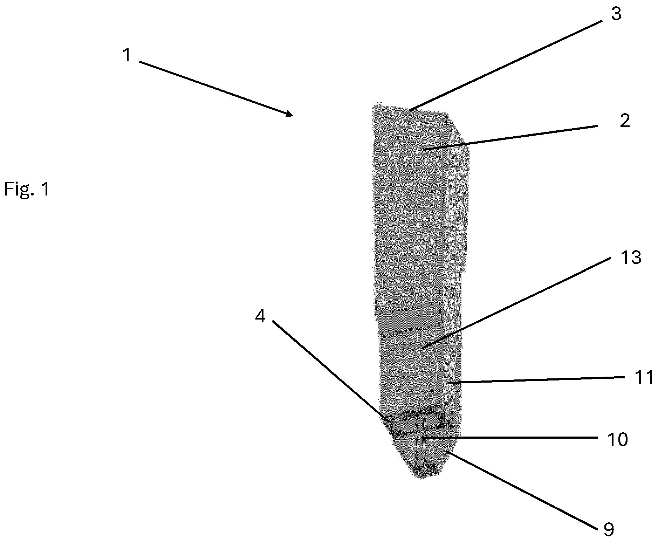

Figur 1 zeigt eine schematische Darstellung einer erfindungsgemässen Küvette zum Verarbeiten einer Probe 8 (nicht dargestellt), umfassend einen Küvettenkörper 2 mit einem proximalen Ende 3, einem distalen Ende 4 und eine den Innenraum des Küvettenkörpers 2 bildende Küvettenkammer 6 (nicht dargestellt). Die Küvette 1 ist mit dem proximalen Ende 3 an einer Pipettenspitze 7 (nicht dargestellt) angeordnet und die Probe 8 kann über das distale 4 Ende der Küvette 1 aufgenommen werden. Hierfür ist am distalen Ende 4 ein Aufnahmeelement 9 zur Aufnahme der Probe 8 angebracht, und das Aufnahmeelement 9 umfasst ein Kapillarelement 10, wobei das Kapillarelement 10 hier ein Kapillarkanal 10 ist, und der Kapillarkanal 10 dergestalt an dem Aufnahmeelement 9 angeordnet ist, dass die Probe 8 mittels Kapillarkräften des Kapillarkanals 10 in den Kapillarkanal 10 aufgenommen werden kann. Die Küvette 1 ist dadurch gekennzeichnet, dass das Aufnahmeelement 9 derart an einer die Küvettenkammer 6 umgebenden Wand 11 des Küvettenkörpers 2 angebracht ist, dass ein erstes Fluid (nicht dargestellt), welches in die Küvettenkammer 6 einbringbar ist, mit der Probe 8 im Kapillarkanal 10 in Kontakt bringbar ist, sodass die Probe 8 mittels Adhäsion in die Küvettenkammer 6 aufgenommen werden kann.

Wie in Figur 1 und auch 2 gezeigt, ist das Aufnahmeelement 9 als eine Verlängerung mindestens der Wand 11 des distalen Endes 4 der Küvette 1 angeordnet. Es können aber auch mehrere Verlängerungen an einer Wand (11) oder an mehreren Wänden (11) angeordnet werden (nicht dargestellt).

Figur 1 zeigt zudem, dass die mindestens eine Messfläche 13 der Küvette 1 an dem Küvettenkörper 2 angeordnet ist.

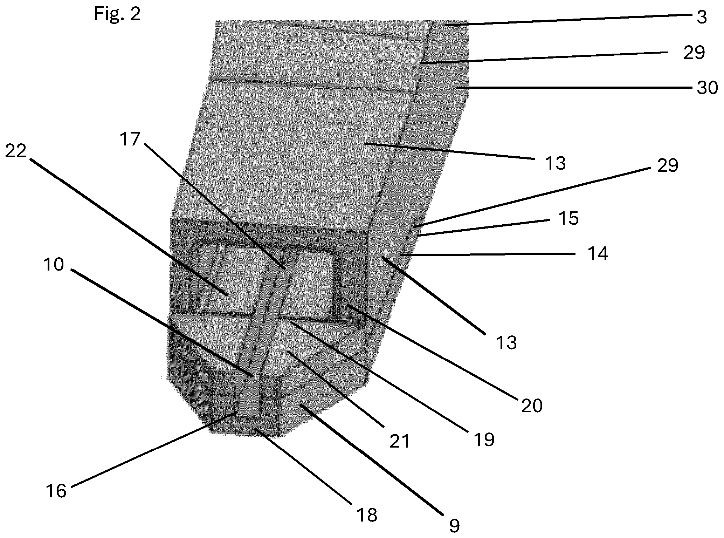

Die Küvette 1 aus Figur 2 weist zudem am distalen Ende 4 eine beidseitige Verjüngung 29 auf. An einer dieser Verjüngungen 29 ist ein Aufnahmeelement 9 dergestalt angeordnet, dass es mit dem nicht verjüngten proximalen Ende 3 der Küvette 1 eine im Wesentlichen plane Fläche 30 bildet.

Ein Umfang einer Anordnung aus Küvette 1 und Aufnahmeelement 9, insbesondere mehrerer Aufnahmeelemente (nicht gezeigt), ist somit im Wesentlich gleich dem Umfang der Küvette 1 am proximalen Ende 3.

Figur 2 zeigt eine schematische Darstellung des distalen Endes 4 der Küvette 1 nach einem der vorangehenden Ansprüche, wobei die Küvette 1 am distalen Ende 4 über einen ersten Verbindungsbereich 14 verfügt, der mit einem zweiten, an einem proximalen Ende 19 des Aufnahmeelements 9 angebrachten, Verbindungsbereich 15 mit dem Aufnahmeelement 9 verbunden ist, sodass das Aufnahmeelement 9 über die Verbindungsbereiche 14,15 abnehmbar an der Küvette 1 angeordnet ist, wobei der erste 14 und der zweite 15 Verbindungsbereich insbesondere eine formschlüssige Steckverbindung bilden.

Figur 2 zeigt weiterhin eine Küvette 1 bei der das Kapillarelement ein Kapillarkanal 10 ist und über eine erste Öffnung 16 zum Aufnehmen der Probe 8 verfügt und über eine zweite Öffnung 17 zum Abgeben der Probe 8, wobei der Kapillarkanal 10 ein an einer Umfangsseite 33 offener Kapillarkanal 10 ist, wobei die zweite Öffnung 17 die offenen Umfangsseite 33 ist.

Der Kapillarkanal 10 in Figur 2 erstreckt sich auf einer Innenseite 21 des Aufnahmeelements 9 von einem distalen Ende 18 des Aufnahmeelements 9 über das proximale Ende 19 des Aufnahmeelements 9 und weiter auf einer an das proximale Ende 19 angrenzende Innenwand 22 der Küvettenkammer 6 (nicht dargestellt) bis in die Küvettenkammer 6. Es ist aber auch denkbar, dass sich der Kapillarkanal 10 lediglich auf der Innenwand 22 des Aufnahmeelements 9 bis zur Küvettenkammer 6 erstreckt.

Das Aufnahmeelement 9 der Küvette 1 ist dabei dergestalt an dem distalen Ende 4 der Küvette 1 angebracht, dass es sich über 5 - 80% der Fläche 20 des distalen Endes 4 erstreckt, bevorzugt über 15 - 80% und weiterhin bevorzugt über 20 - 40% und besonders bevorzugt über 20 - 33 % der Fläche 20 erstreckt.

Wie in Figur 1 und 2 gezeigt, ist ein durch den Kapillarkanal 10 aufnehmbares Volumen durch die Geometrie des Kapillarkanals 10 vorgegeben, sodass durch den Kapillarkanal 10 immer ein genau vorgebbares Volumen aufgenommen werden kann, wobei der Kapillarkanal 10 insbesondere eine definierte Innenkontur mit einem vorbestimmten Querschnitt und/oder einer entsprechenden Länge aufweist, sodass das aufnehmbare Volumen durch diese geometrischen Parameter eindeutig festgelegt ist.

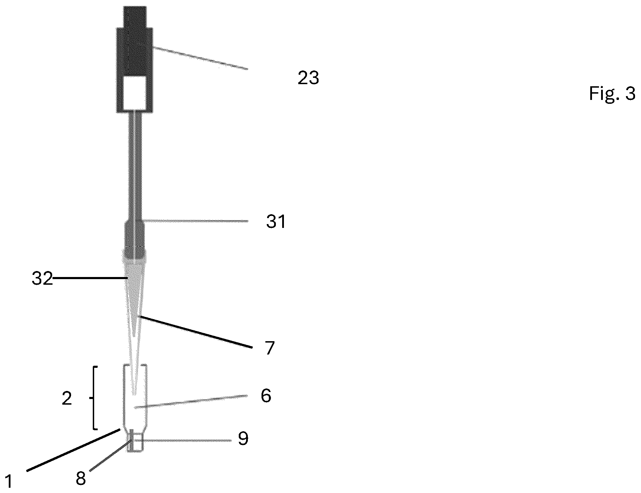

Figur 3 zeig eine schematische Darstellung einer erfindungsgemässen Küvette 2, angeordnet an einer Pipettiervorrichtung 23. Die Küvette 2 ist dabei mittels einer Pipettenspitze 7 an einem Adapter 31 der Pipettiervorrichtung 23 angeordnet.

Die Pipettenspitze 7 ragt in die Küvettenkammer 6 der Küvette 1 herein, welche den Innenraum des Küvettenkörpers 2 bildet. In der Pipettenspitze 7 ist ein erstes Fluid 32 vorgelegt, welches durch Betätigung der Pipettiervorrichtung 23 mit der im Kapillarelement 10 (nicht dargestellt) befindlichen Probe 8 in Kontakt gebracht werden kann.

Ebenfalls zeigt die Küvette 1 aus Figur 3 das Aufnahmeelement 9 als integralen Bestandteil der Küvette 1.

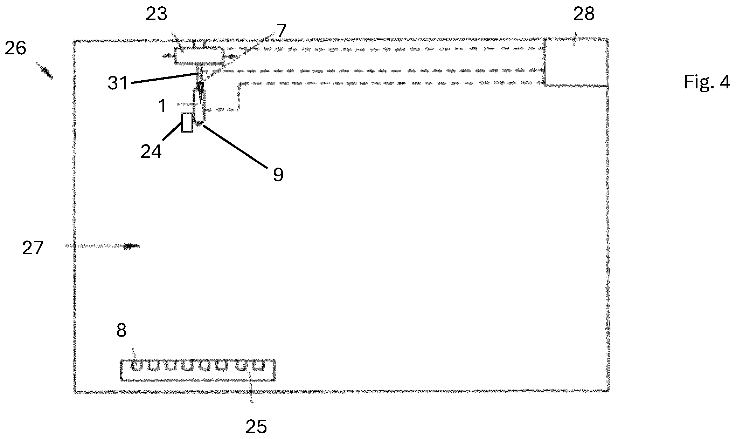

Figur 4 zeigt eine schematische Darstellung einer erfindungsgemässen Küvette 1 im Querschnitt. Der Querschnitt ist entlang der ersten Öffnung 16 des Kapillarkanals 10 über das distale Ende 4 und die Küvettenkammer 6 bis hin zum proximalen Ende 3 geführt. Das Aufnahmeelement 9 ist dabei am distalen Ende 9 angeordnet.

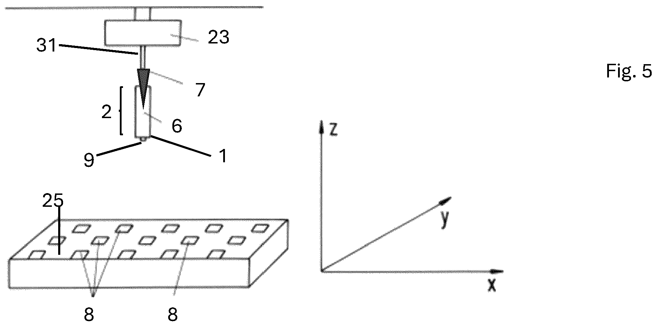

Figur 5 zeigt eine schematische Darstellung einer erfindungsgemässen Küvette 1 mit Kapillarplatten 10, die am distalen Ende 4 des Küvettenkörper 2 angeordnet sind und das Kapillarelement des Aufnahmeelements 9 bilden.

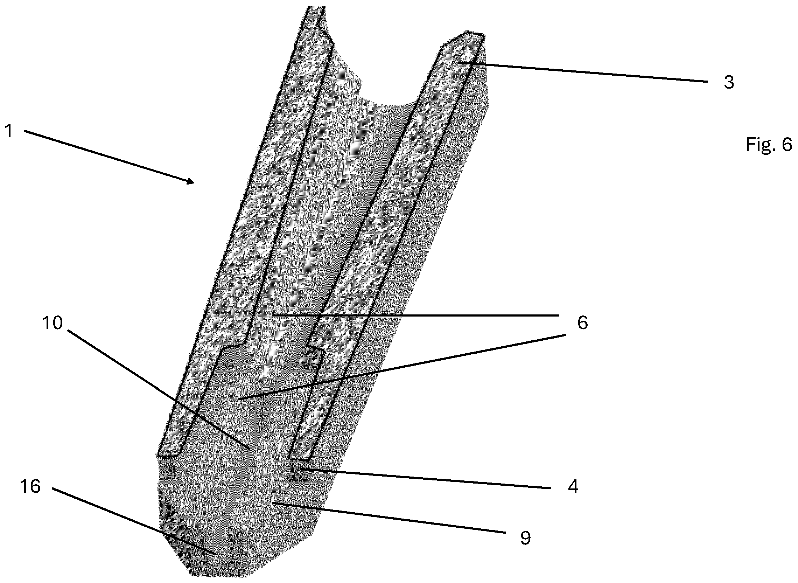

Figur 6 zeigt eine schematische Darstellung einer erfindungsgemässen Küvette 1, angeordnet in einem Behandlungsraum 27 eines Laborautomaten 26 zur Durchführung eines Verfahrens zum Verarbeiten einer Probe 8.

Die Figur 6 zeigt weiterhin eine Pipettiervorrichtung 23, an der die Küvette 1 angeordnet ist. Die Probe 8 kann in das Kapillarelement 10 (nicht dargestellt) mittels des Aufnahmeelements 9 durch Einführen des Aufnahmeelements 9 in die Probe 8 aufgenommen werden, wobei die Probe 8 selbst zunächst in einem Probenbehälter 25 im Behandlungsraum 27 angeordnet ist. Zum Einführen des Aufnahmeelements 9 in die Probe 8 dient eine Steuereinrichtung 28, die die Pipettiervorrichtung 23 durch den Behandlungsraum 27 bewegen und deren Funktionen bedienen kann. Die Steuereinrichtung 28 kann dabei manuell gesteuert werden, oder mit einer Steuerbedienung (nicht gezeigt) signalverbunden sein. Insbesondere kann sie dabei mittels Kabel und/oder wireless, etwa über Funk, Bluetooth oder W-Lan verbunden sein.

Das Aufnehmen der Probe 8 in die Küvettenkammer 6 (nicht dargestellt) aus dem Kapillarelement 10 erfolgt dabei durch Betätigung der Pipettiervorrichtung 23, mit der das erste Fluid 32 (nicht gezeigt) in Kontakt mit der im Kapillarelement 10 befindlichen Probe 8.gebracht werden kann, sodass die Probe 8 mittels Adhäsion in die Küvettenkammer 6 aufgenommen werden kann.

In der Küvettenkammer 6 können das erst Fluid 32 und/oder die Probe 8 durch Auf- und Abpipettieren in der Küvette 1 und/oder in einer Pipettenspitze 7 der Pipettiervorrichtung 23 gemischt und auch abgegeben werden.

Zur Analyse der Probe 8 ist eine Detektionsvorrichtung 24 in dem Laborautomaten 26 angebracht. Diese Detektionsvorrichtung 24 kann, wie in Figur 4 gezeigt, direkt an der Küvette 1 angeordnet sein oder auch an verschiedenen Orten im Laborautomaten 26 angeordnet sein, sodass die Probe 8 mittels der Pipettiervorrichtung 23 zu der Detektionsvorrichtung 24 gebracht werden kann.

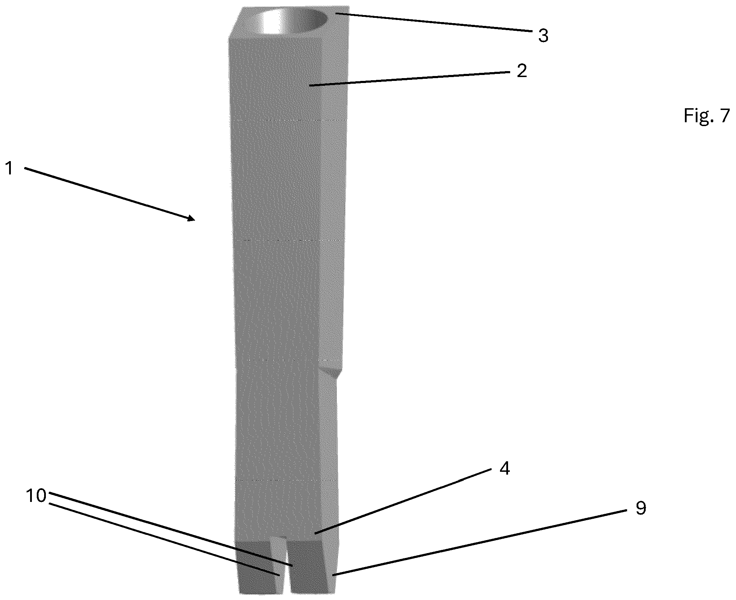

Figur 7 zeigt eine schematische Darstellung eines Ausschnitts einer Pipettiervorrichtung 23 mit einer erfindungsgemässen Küvette 1. Die Küvette 1 ist mittels der Pipettenspitze 7 und dem Adapter 31 an der Pipettiervorrichtung 23 angebracht und ragt in die Küvettenkammer 6, welche den Innenraum des Küvettenkörpers 2 bildet. Die Küvette 1 kann so durch die Pipettiervorrichtung 23 hin zu dem Probenbehälter 25 mit den darin enthaltenen Proben 8 bewegt werden. Die Pipettiervorrichtung 23 kann in alle Raumrichtungen (X, Y, Z) bewegt werden, sodass sie jeden Punkt des dargestellten Koordinatensystems erreichen kann.

Durch die oben erläuterten Merkmale erlaubt es die vorliegende Erfindung erstmal, Proben, Fluide und Analysestoffe in kleinen Mengen mit geringem Fehler direkt in eine Küvette aufzunehmen, zu verarbeiten und zu analysieren.

Dadurch wird eine höhere Genauigkeit der Verarbeitung erreicht und zeitgleich werden Ressourcen gespart, da geringere Volumen an Probe, Fluid und Analysestoffen eingesetzt werden müssen, um verlässliche Daten zu erhalten, als es im Stand der Technik bisher der Fall ist.

Eine solche Einsparung von Ressourcen ist nicht nur aus der Perspektive der Nachhaltigkeit ein Vorteil, sondern birgt auch finanzielle Vorteile.

## Patentansprüche

1. Küvette zum Verarbeiten einer Probe (8), umfassend einen Küvettenkörper (2) mit einem proximalen Ende (3), einem distalen Ende (4) und eine den Innenraum des Küvettenkörpers (2) bildende Küvettenkammer (6), wobei die Küvette (1) mit dem proximalen Ende (3) an einer Pipettenspitze (7) anordnenbar ist und die Probe (8) über das distale (4) Ende aufnehmbar ist, wobei am distalen Ende (4) ein Aufnahmeelement (9) zur Aufnahme der Probe (8) anbringbar ist, und das Aufnahmeelement (9) mindestens ein Kapillarelement (10) umfasst, wobei das Kapillarelement (10) dergestalt an dem Aufnahmeelement (9) angeordnet ist, dass die Probe (8) mittels Kapillarkräften des Kapillarelements (10) in das Kapillarelement (10) aufgenommen werden kann, und wobei ein erstes Fluid (32) in die Küvettenkammer (6) einbringbar ist, **dadurch gekennzeichnet, dass** das Aufnahmeelement (9) derart an einer die Küvettenkammer (6) umgebenden Wand (11) des Küvettenkörpers (2) anbringbar ist, dass das erste Fluid (32) in Kontakt mit der sich im Kapillarelement (10) befindlichen Probe (8) bringbar ist und diese Probe (8) mittels Adhäsionskräften des ersten Fluids (32) in die Küvettenkammer (6) aufgenommen werden kann.

2. Küvette nach Anspruch 1, wobei das Aufnahmeelement (9) als eine Verlängerung mindestens der Wand (11) des distalen Endes (4) der Küvette (1) anordnenbar ist.

3. Küvette nach Anspruch 1 oder 2, umfassend mindestens einen an dem Küvettenkörper (2) angeordneten Messbereich (13).

4. Küvette nach einem der vorangehenden Ansprüche, wobei die Küvette (1) am distalen Ende (4) über einen ersten Verbindungsbereich (14) verfügt, der mit einem zweiten, an einem proximalen Ende (19) des Aufnahmeelements (9) angebrachten, Verbindungsbereich (15) mit dem Aufnahmeelement (9) verbindbar ist, sodass das Aufnahmeelement (9) über die Verbindungsbereiche (14,15) abnehmbar an der Küvette (1) angeordnet ist, wobei der erste (14) und der zweite (15) Verbindungsbereich insbesondere eine fluiddichte formschlüssige Steckverbindung bilden.

5. Küvette nach einem der vorangehenden Ansprüche, wobei das Kapillarelement (10) sich auf einer Innenseite (21) des Aufnahmeelements (9) von einem distalen Ende (18) des Aufnahmeelements (9) über das proximale Ende (19) des Aufnahmeelements (9) und auf einer an das proximale Ende (19) angrenzende Innenwand (22) der Küvettenkammer (6) bis in die Küvettenkammer (6) erstreckt.

6. Küvette nach Anspruch 5, wobei das Kapillarelement (10) sich lediglich bis zur Küvettenkammer (6) erstreckt.

7. Küvette nach einem der vorangehenden Ansprüche, wobei das Aufnahmeelement (9) integraler Bestandteil der Küvette (1) ist.

8. Küvette nach einem der vorangehenden Ansprüche, wobei ein durch das Kapillarelement (10) aufnehmbares Volumen durch eine Geometrie des Kapillarelement (10) vorgegeben wird, sodass durch das Kapillarelement (10) immer ein genau vorgebbares Volumen aufgenommen werden kann, wobei das Kapillarelement (10) insbesondere eine definierte Innenkontur mit einem vorbestimmten Querschnitt und/oder einer entsprechenden Länge aufweist, sodass das aufnehmbare Volumen durch diese geometrischen Parameter eindeutig festgelegt ist.

9. Küvette nach einem der vorangehenden Ansprüche, wobei das Kapillarelement (10) ein Kapillarkanal ist.

10. Küvette nach einem der Ansprüche 1-9, wobei das Kapillarelement (10) Kapillarplatten sind.

11. Verfahren zum Verarbeiten einer Probe (8) mit einer Küvette (1) nach einem der Ansprüche 1-10, umfassend die folgenden Schritte:
- Bereitstellen einer Pipettiervorrichtung (23);
- Anordnen der Küvette (1) an der Pipettiervorrichtung (23);
- Aufnehmen der Probe (8) in das Kapillarelement (10) durch Einführen des Aufnahmeelements (9) in die Probe (8);
- Einbringen des ersten Fluids (32) in die Küvettenkammer (6) durch Betätigung der Pipettiervorrichtung (23).;
- Aufnehmen der Probe in die Küvettenkammer (6) durch Adhäsion mittels Herstellung von Kontakt zwischen der im Kapillarelement (10) befindlichen Probe (8) mit dem ersten Fluid (32) durch Betätigung der Pipettiervorrichtung (23).

12. Verfahren nach Anspruch 11, wobei das erste Fluid (32) und die Probe (8) durch Auf- und Abpipettieren in der Küvette (1) und/oder in einer Pipettenspitze (7) der Pipettiervorrichtung (23) gemischt werden.

13. Verfahren nach einem der Ansprüche 11-12, wobei die Probe (8) und/oder ein Gemisch aus erstem Fluid (32) und Probe (8) aus der Küvette (1) abgegeben werden.

14. Verfahren nach einem der Ansprüche 11-13, wobei die Probe (8) und/oder das Fluid (32) und/oder das Gemisch aus Probe (8) und erstem Fluid (32) in und/oder ausserhalb der Küvettenkammer (6) analysiert werden, insbesondere mittels einer Detektionsvorrichtung (24) analysiert werden.
